# EUROPEAN PATENT SPECIFICATION

(11) **EP 0 538 217 B1**
(45) Date of publication and mention of the grant of the patent: **10.07.1996**
(21) Application number: 92850212.9
(22) Date of filing: 09.09.1992
(51) Int. Cl.: H04B 7/26, H04M 11/00, H04M 11/02

(54) **Apparatus for sound level reduction or operator alerting**
Vorrichtung zur Reduktion der Lautstärke oder zur Alarmierung eines Benutzers
Dispositif pour la réduction du niveau sonore ou pour alerter un opérateur

(30) Priority: 14.10.1991 SE 9102980
(43) Date of publication of application: 21.04.1993
(73) Proprietor: ERICSSON INC., Paramus, NJ 07652 (US)
(72) Inventor: Barvesten, Mats Olof, S-222 48 Lund (SV)
(74) Representative: Mrazek, Werner

(56) References cited:
- EP-A- 0 264 006
- WO-A-86/03353
- WO-A-89/03147
- US-A- 4 425 477

## Description

### TECHNICAL FIELD

The present invention relates to an apparatus for either sound level reduction in sound equipment or operator alerting from a mobile telephone provided in a vehicle.

### BACKGROUND OF THE INVENTION

In previously known mobile telephony systems there is provided a function that allows damping or turning off sound equipment, for instance the car radio or stereo equipment in the car, during a call. This function is called music mute. In this case the sound equipment is connected to a special output of the mobile telephone. The function is activated from the set up to the disconnection of a call.

Furthermore, it is previously known to provide the mobile telephone with a special output for operator alerting in the event of a call signal, so called horn alert. For instance, the output can be connected to the car horn or an external lamp to attract the operators attention in the event of incoming calls. This function is widely used by craftsmen and repairmen that have to leave the car to perform some nearby work.

In some systems both functions are provided, that is there is one output for sound level reduction in sound equipment and one output for operator alerting. Such a system is known, for instance, from W0-A-89 03147.

### SUMMARY OF THE INVENTION

Experience has shown that the users of mobile telephony systems in practice only use one of the above functions, either sound level reduction or operator alerting.

One object of the present invention is therefore to provide an apparatus that allows that the same output from the mobile telephone alternatively can be used for either sound level reduction or operator alerting.

In accordance with the invention this object is obtained by an apparatus that is characterized by means for storing an indicator of the chosen function, either sound level reduction or operator alerting, and for choosing, on the basis of said indicator, a corresponding program section of a control program for activating an output from the mobile telephone common to both functions in a manner appropriate to the chosen function.

### BRIEF DESCRIPTIONS OF THE DRAWING

The invention, further objects and advantages obtained with the invention are best understood by reference to the following description and the accompanying drawing, that shows a preferred embodiment of the invention.

In the drawing
- Fig. 1: shows sound equipment connected to a mobile telephone;
- Fig. 2: shows a signal horn connected to a mobile telephone; and
- Fig. 3: shows a block diagram of a preferred embodiment of an apparatus in accordance with the present invention.

### PREFERRED EMBODIMENT

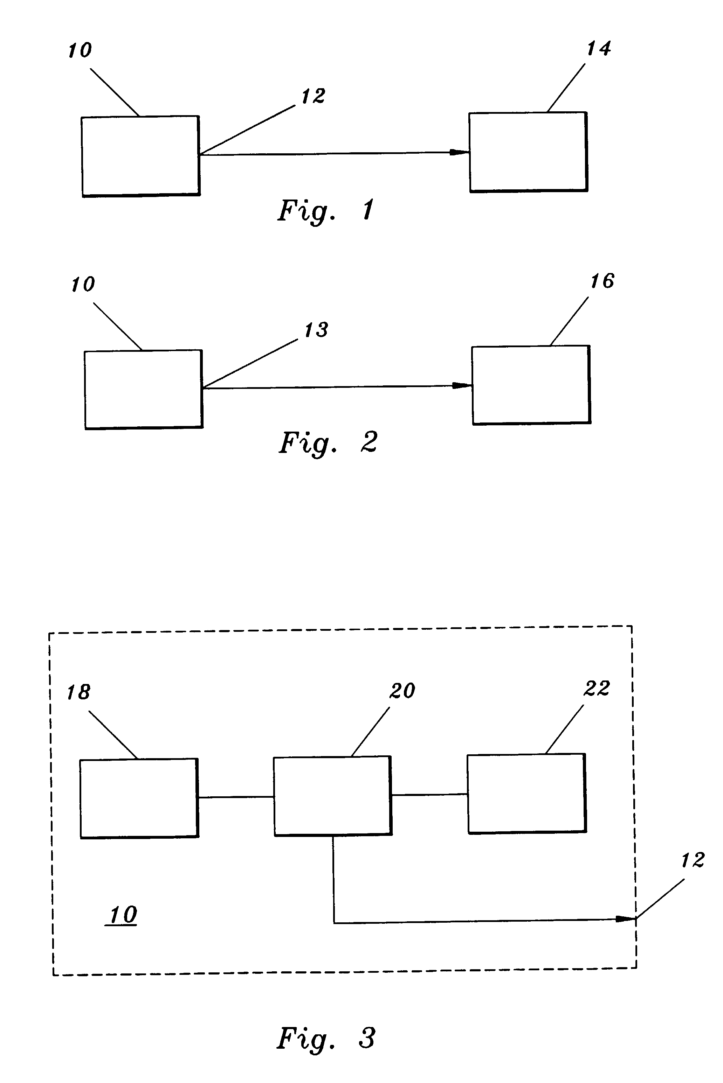

Fig. 1 shows a block diagram of a mobile telephone 10 with an output 12, that is connected to sound equipment in a car, for instance a car radio or stereo equipment. A program in mobile telephone 10 contains a program section that in the event of a call activates output 12, so that the sound level in equipment 14 is reduced or the equipment is temporarily turned off. When the call has been completed equipment 14 returns to its normal sound level.

In Fig. 2 an output 13 on a mobile telephone 10 is connected to an external source 17 for operator alerting, for instance the car signal horn or a lamp. In the event of a call a program section in mobile telephone 10 activates an output 13, so that the signal horn will hoot or the lamp flashes to attract the attention of the operator.

Fig. 3 shows a preferred embodiment of an apparatus in accordance with the invention, in which the same output 12 is used for either sound level reduction in sound equipment or operator alerting over an external source. For this purpose mobile telephone 10 contains a control program stored in a program memory 18. The program memory is connected to a controller 20, that performs the instructions stored in memory 18. Furthermore an external memory 22, for instance of EEPROM type is connected to controller 20. In the external memory 22 a variable can be stored in a predetermined memory cell. Each time output 12 is to be activated controller 20 executes a certain program section in memory 18. This program section orders controller 20 to sense the value stored in the predetermined memory cell of external memory 22. If a certain predetermined value has been sensed controller 20 executes a corresponding program section in program memory 18 for sound level reduction in sound equipment. However, if another predetermined value has been sensed controller 20 executes another program section in program memory 18 for operator alerting.

Since a corresponding value is stored into said memory cell in external memory 22 already at the time the customer orders the mobile telephone, the telephone can easily be adapted to the customers wishes without the need for accessing the interior of the mobile telephone. Also only one output has to be used for both functions, of which, however, only one can be activated at any given time. The set-up of the external memory 22 can for instance be performed by a service program.

It will be understood by those skilled in the art that various modifications and changes may be made to the present invention without departure from the scope thereof, which is defined by the appended claims.

## Claims

1. Apparatus for either sound level reduction of sound equipment (14) or operator alerting (16) from a mobile telephone (10) provided in a vehicle, **characterized by** means (22) for storing an indicator of the chosen function, sound level reduction or operator alerting, and for choosing, on the basis of said indicator, a corresponding program section in a control program (18) for activating an output (12) from the mobile telephone common to both functions in a manner appropriate to the chosen function.

2. The apparatus of claim 1, **characterized in that** the chosen function is stored as a corresponding value in a predetermined memory cell of an EEPROM (22), which memory cell always is sensed in connection with activation of the output (12).

## Patentansprüche

1. Vorrichtung, um entweder eine Schallpegelreduktion eines Schallgeräts (14) oder einen Benutzeralarm (16) von einem mobilen Telefon (10), welches in einem Fahrzeug vorgesehen ist, durchzuführen, gekennzeichnet durch eine Einrichtung (22) zum Speichern einer Anzeige der gewählten Funktion, einer Schallpegelreduktion oder eines Benutzeralarms, und zum Wählen, auf der Basis der Anzeige, eines entsprechenden Programmabschnitts in einem Steuerprogramm (18) zum Aktivieren eines Ausgangs (12) von dem mobilen Telefon, welcher gemeinsam für beide Funktionen vorgesehen ist, in einer für die gewählte Funktion geeigneten Weise.

2. Vorrichtung nach Anspruch 1, dadurch gekennzeichnet, daß die gewählte Funktion als ein entsprechender Wert in einer vorgegebenen Speicherzelle eines EEPROMs (22) gespeichert wird, wobei diese Speicherzelle immer in Verbindung mit einer Aktivierung des Ausgangs (12) erfaßt wird.

## Revendications

1. Dispositif destiné soit à réduire le niveau sonore d'un équipement acoustique (14), soit à alerter (16) un opérateur à partir d'un téléphone mobile (10) disposé dans un véhicule, caractérisé par des moyens (22) pour mémoriser un indicateur de la fonction choisie, la réduction du niveau sonore ou l'alerte de l'opérateur, et pour choisir, sur la base dudit indicateur, une section de programme correspondante dans un programme de commande (18) pour activer une sortie (12) du téléphone mobile, qui est commune aux deux fonctions, d'une manière appropriée pour la fonction choisie.

2. Dispositif selon la revendication 1, caractérisé en ce que la fonction choisie est mémorisée sous la forme d'une valeur correspondante dans une cellule de mémoire prédéterminée d'une mémoire EEPROM (22), laquelle cellule de mémoire est toujours détectée en liaison avec une activation de la sortie (12).
